# EUROPÄISCHE PATENTSCHRIFT

(11) **EP 0 979 991 B1**
(45) Veröffentlichungstag und Bekanntmachung des Hinweises auf die Patenterteilung: **19.06.2002**
(21) Anmeldenummer: 98113938.9
(22) Anmeldetag: 24.07.1998
(51) Int. Cl.: G01L 7/04

(54) **Messsystem für ein Druckmessgerät sowie Verfahren zur Herstellung eines Messsystems für ein Druckmessgerät**
Measuring system for a pressure sensing device and method of manufacturing a measuring system for a pressure sensing device
Système de mesure pour un capteur de pression et procédé de fabrication d'un système de mesure pour un capteur de pression

(43) Veröffentlichungstag der Anmeldung: 16.02.2000
(60) Teilanmeldung: 01126670.7
(73) Patentinhaber: WIKA ALEXANDER WIEGAND GmbH & CO., D-63911 Klingenberg (DE)
(72) Erfinder: Klein, Kurt, 63911 Klingenberg (DE); Wahl, Detlef, 63906 Erlenbach (DE); Schliessmann, Heiko, 63863 Eschau (DE); Meisenzahl, Burkard, 63927 Bürgstadt (DE); Berninger, Helmut, 63785 Obernburg (DE); Friebe, Bernd, 61267 Neu-Anspach (DE)
(74) Vertreter: Tiedtke, Harro, Dipl.-Ing.

(56) Entgegenhaltungen:
- DE-A- 2 354 473
- DE-U- 9 215 178

## Beschreibung

Die Erfindung bezieht sich auf ein Meßsystem für ein Druckmeßgerät gemäß dem Oberbegriff von Patentanspruch 1.

Ein Meßsystem mit dem Merkmalen des Oberbegriffs von Patentanspruch 1 ist durch die Veröffentlichung US-A-5 640 992 bekannt. Das bekannte Meßsystem kann mit einem auf die vordere Platine aufgesetzten Zifferblatt und einem auf den Zeigerzapfen aufgesetzten Zeiger versehen sein. Die Einheit aus dem Meßsystem, dem Zifferblatt und dem Zeiger kann in einem Gehäuse angeordnet sein, das vor dem Zifferblatt eine Sichtscheibe trägt, so daß diese Elemente dann ein Druckmeßgerät bilden.

Bei dem bekannten Meßsystem besteht der Federträger aus einem quaderförmigen, metallischen Bauteil, an dem einerseits der durchbohrter Anschlußzapfen angeformt und andererseits eine Nut ausgebildet ist. Der Anschlußzapfen ist mit einem Gewinde versehen und dient als Geräteanschluß zum Anschließen des Druckmeßgeräts an ein System, in dem der Meßdruck, d.h. der zu messende Druck, herrscht und steht in Verbindung mit der Nut. Das eine Ende der Rohrfeder ist in die Nut eingesetzt und dort mit dem Federträger verbunden. Mit dem anderen Ende der Rohrfeder ist das Federendstück derart verbunden, daß das andere Ende druckdicht geschlossen ist. Der Meßdruck gelangt durch den Geräteanschluß in die gekrümmte Rohrfeder, die in Abhängigkeit von der Höhe des Meßdrucks aufgeweitet wird, so daß ihr anderes Ende und somit das Federendstück ausgelenkt werden. Das Federendstück ist bei dem bekannten Meßsystem mittels einer Zugstange gelenkig mit dem Hebelabschnitt des Zahnsegmentes verbunden, so daß die Auslenkung des Federendstücks in eine Drehung der Zeigerwelle und somit des Zeigers umgewandelt wird. Am Zifferblatt zeigt der Zeiger den herrschenden Meßdruck an.

Im Zuge der Herstellung des bekannten Meßsystems wird üblicherweise das eine Ende der Rohrfeder am Federträger befestigt und wird das Federendstück mit dem anderen Ende der Rohrfeder verlötet. Parallel dazu wird das Zeigerwerk montiert. Das montierte Zeigerwerk wird dann am Federträger angeschraubt. Dabei muß darauf geachtet werden, daß die Rohrfeder und das Federendstück möglichst genau ihre Sollstellungen bezüglich des Zeigerwerks, insbesondere bezüglich der Drehachse des Zahnsegmentes, einnehmen, da von der Genauigkeit, mit der diese Sollstellungen eingehalten werden, die Genauigkeit der Druckmessung und der Druckanzeige beeinflußt wird. Nachdem das Zeigerwerk am Federträger befestigt worden ist, wird die Zugstange gelenkig sowohl mit dem Federendstück als auch mit dem Hebelabschnitt des Zahnsegmentes verbunden, damit die Auslenkung des Federendstücks zum Hebelabschnitt übertragen werden kann.

Aufgrund der vorstehend beschriebenen Herstellung des bekannten Meßsystems ist nicht gewährleistet, daß die Rohrfeder und das Federendstück ihre geometrischen Sollstellungen bezüglich des Zeigerwerks einnehmen, was, je nach den Genauigkeitsanforderungen an das Meßsystem, eine mehr oder weniger aufwendige Justierung des Meßsystems notwendig machen kann.

Durch die Veröffentlichung DE 23 54 473 C2 ist ein Meßsystem bekannt bei dem der Federträger entweder als mit der oberen Platine verschraubtes Metallstück, in das das eine Ende der Rohrfeder luftdicht eingespannt ist, oder als Blechlappen ausgebildet ist, der mit der oberen Platine einstückig ausgebildet oder an dieser angeschraubt ist. Wenn der Federträger als Blechlappen ausgebildet ist, wird im Zuge der Herstellung dieses bekannten Meßsystems das eine Ende der Rohrfeder auf den Blechlappen geschoben. Außerdem wird ein der Zufuhr des Meßdrucks dienendes Röhrchen in das eine Ende der Rohrfeder eingeschoben. Der Blechlappen, das Röhrchen und das eine Ende der Rohrfeder werden schließlich miteinander verschweißt. Wenn bei diesem bekannten Meßsystem der Federträger an der Platine des Zeigerwerks angeschraubt wird, sind die Herstellung des Meßsystems und seine Justierung ähnlich aufwendig wie bei dem zuvor beschriebenen bekannten Meßsystem.

Der Erfindung liegt die Aufgabe zugrunde, das gattungsgemäße Meßsystem dahingehend weiterzubilden, daß der Federträger besonders kompakt und auf besonders zweckmäßige Weise in das Zeigerwerk integriert ist.

Diese Aufgabe wird erfindungsgemäß durch das Meßsystem gemäß Anspruch 1 gelöst.

Vorteilhafte Ausgestaltungen der Erfindung sind in den abhängigen Ansprüchen gekennzeichnet.

Ein Ausführungsbeispiel der Erfindung wird im folgenden anhand der Zeichnungen näher erläutert. Es zeigen:
- Fig. 1: eine Seitenansicht eines Ausführungsbeispiels des erfindungsgemäßen Meßsystems, wobei eine Rohrfeder des Meßsystems teilweise weggebrochen dargestellt ist;
- Fig. 2: eine Vordersicht des Meßsystem gemäß Fig. 1 bei Betrachtung in Richtung eines Pfeiles A in Fig. 1;
- Fig. 3: eine Ansicht eines Federträgers des Meßsystems gemäß den Figuren 1 und 2 bei Betrachtung in Richtung eines Pfeiles B in Fig. 2;
- Fig. 4: eine Draufsicht zu Fig. 3;
- Fig. 5: eine Schnittdarstellung eines Druckmeßgerätes mit dem Meßsystem gemäß den Figuren 1 bis 4, wobei das Meßsystem in Seitenansicht dargestellt ist und dessen Rohrfeder teilweise weggebrochen dargestellt ist;
- Fig. 6: eine ausschnittsweise Schnittdarstellung zur Erläuterung der Befestigung des Meßsystems des Druckmeßgerätes gemäß Fig. 5 an dessen Gehäuse; und
- Fig. 7: eine ausschnittsweise Schnittdarstellung zur Erläuterung eines Druckanschlusses des Druckmeßgerätes gemäß Fig. 5.

In den Figuren sind gleiche bzw. einander entsprechende Elemente jeweils mit demselben Bezugszeichen bezeichnet.

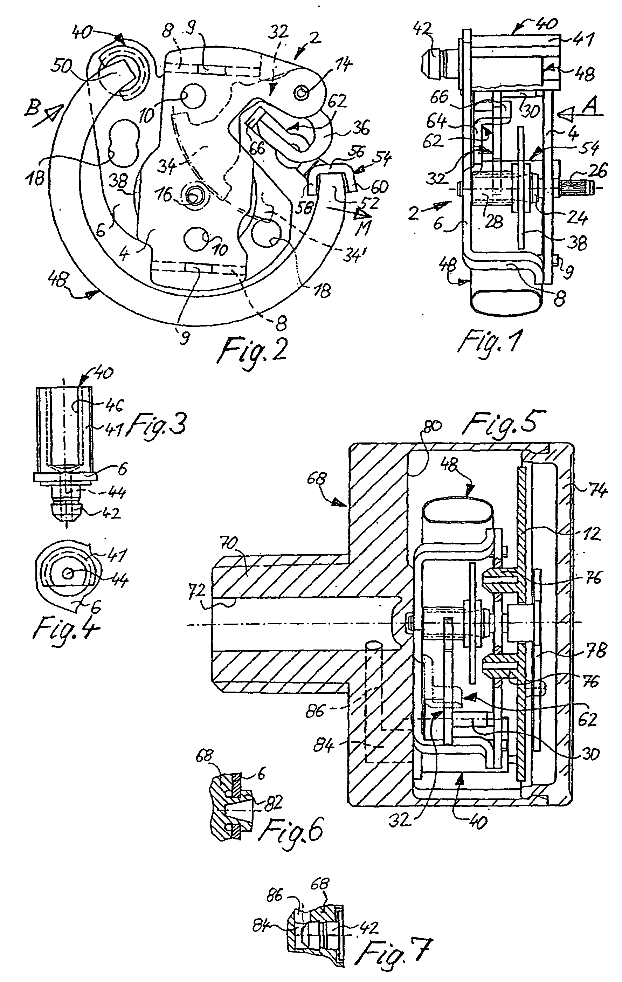

Das in den Figuren 1 bis 4 dargestellte Ausführungsbeispiel eines Meßsystems umfaßt ein sogenanntes Zeigerwerk 2, das als tragende Elemente eine obere Platine 4 und eine untere Platine 6 aufweist. Wie insbesondere Fig. 1 zeigt, sind die ober Platine 4 und die untere Platine 6 mit Abstand voneinander und parallel zueinander angeordnet. Die obere Platine 4 ist eben, besteht aus einem Metallblech und ist als Stanzteil hergestellt. Die untere Platine 6 weist einen ebenen Hauptabschnitt auf, besteht ebenfalls aus einem Metallblech und ist durch Stanzen und Umbiegen hergestellt. Am ebenen Hauptabschnitt der unteren Platine 6 sind zwei unter ungefähr 90° umgebogene, zur oberen Platine 4 gerichtete Lappen 8 angeformt, an denen die obere Platine 4 anliegt. Jeder Lappen 8 weist einen Ansatz 9 auf, der durch eine entsprechende Öffnung in der oberen Platine 4 ragt und verstemmt ist. Auf diese Weise sind die obere Platine 4 und die unter Platine 6 fest miteinander verbunden.

Die obere Platine 4 ist mit zwei Befestigungslöchern 10 versehen, die zur Befestigung eines Zifferblattes 12 an der oberen Platine 4 dienen (siehe Fig. 5). Ferner sind in der oberen Platine 4 ein Lagerloch 14 und ein Lagerloch 16 ausgebildet. In der unteren Platine sind zwei Montagelöcher 18 sowie zwei Lagerlöcher 20 und 22 ausgebildet (siehe Fig. 10).

In dem Lagerloch 16 und dem Lagerloch 22 ist eine Zeigerwelle 24 drehbar gelagert. Die Zeigerwelle 24 weist an ihrem einen Ende einen Zeigerzapfen 26 auf, der in in Fig. 1 gezeigter Weise von der Platine 4 vorsteht. Weil die Platine 4 diejenige ist, von der der Zeigerzapfen 26 vorsteht, wird sie im Rahmen dieser Beschreibung und der Ansprüche als "obere Platine" bezeichnet. Mit der Zeigerwelle 24 fest verbunden ist ein zwischen den beiden Platinen 4 und 6 angeordnetes Ritzel 28.

In den Lagerlöchern 14 und 20 ist eine Welle 30 eines zwischen den beiden Platinen 4 und 6 angeordneten Zahnsegmentes 32 gelagert. Beim dargestellten Ausführungsbeispiel ist das Zahnsegment 32 als zweiarmiger Hebel ausgebildet, dessen einer Arm durch einen verzahnten Abschnitt 34 gebildet ist und dessen anderer Arm durch einen Hebelabschnitt 36 gebildet ist. Der verzahnte Abschnitt 34 und der Hebelabschnitt 36 liegen in einer zu den Ebenen der Platinen 4 und 6 parallelen Ebene. In dieser Ebene ist der Hebelabschnitt 36 U-förmig gekrümmt. Der verzahnte Abschnitt 34 kämmt mit dem Ritzel 28.

Zwischen den beiden Platinen 4 und 6 ist ferner eine als Spiralfeder ausgebildete Vorspannfeder 38 angeordnet, deren eines Ende mit der Zeigerwelle 24 verbunden ist und deren anderes Ende in nicht dargestellter Weise an der unteren Platine 6 festgelegt ist. Die Vorspannfeder 38 übt ein Vorspannmoment im Gegenuhrzeigersinn in Fig. 2 auf das Ritzel 28 aus, das aufgrund des Eingriffs zwischen dem Ritzel 28 und dem verzahnten Abschnitt 34 zu einer elastischen Vorspannkraft am Zahnsegment 32 führt, die dieses im Uhrzeigersinn in Fig. 2 zu drehen versucht.

An der unteren Platine 6 ist ein Federträger 40 in Form einer Hülse 41 befestigt. Am in Fig. 3 unteren Ende der Hülse 41 ist ein Anschlußzapfen'42 mit einer mittigen Bohrung 44 angeformt, die in den Innenraum der Hülse mündet. Die Hülse 41 sitzt auf der in Fig. 2 sichtbaren Vorderseite der unteren Platine 6, und der Anschlußzapfen 42 verläuft durch ein Loch in der unteren Platine 6, so daß er von deren Rückseite vorsteht, wie dies in den Figuren 1 und 3 gezeigt ist. Die den Federträger 40 bildende Hülse 41 ist durch Verstemmen an der unteren Platine befestigt. Die Hülse 41 ist an ihrem in Fig. 3 oberen Ende offen und weist einen in ihrer Längsrichtung verlaufenden Schlitz 46 auf.

Das Meßsystem weist zusätzlich zu dem vorstehend erläuterten Zeigerwerk 2 und dem mit dem Zeigerwerk integrierten Federträger 40 eine bogenförmig gekrümmte, metallische Rohrfeder 48 auf. Deren eines Ende 50 erstreckt sich durch den Schlitz 46 in den Innenraum der Hülse 41 und ist mit dem durch die Hülse 41 gebildeten Federträger 40 durch Verlöten starr verbunden. Das Lot ist in Fig. 2 nicht dargestellt. Durch die Bohrung 44 im Anschlußzapfen 42 und den Innenraum der Hülse 41 kann der Meßdruck in das Innere der Rohrfeder 48 gelangen. Ansonsten ist die Verbindung zwischen dem einen Ende 50 der Rohrfeder 48 und dem Federträger 40 druckdicht. Auf diese Weise ist das eine Ende 50 der Rohrfeder 48 starr mit dem Zeigerwerk 2 verbunden und in seiner Lage relativ zum Zeigerwerk 2 festgelegt.

Die Rohrfeder 48 erstreckt sich in einem Bogen von ungefähr 270° um das Zeigerwerk 2, wie dies in Fig. 2 gezeigt ist. An ihrem anderen Ende 52 trägt die Rohrfeder 48 ein Federendstück 54, das mit dem anderen Ende 52 dieses dicht schließend durch Verlöten starr verbunden ist, wobei wiederum das Lot in Fig. 2 nicht dargestellt ist.

Vorstehend ist angegeben, daß das eine Ende 50 der Rohrfeder 48 mit dem Federträger 40 verlötet ist und daß das andere Ende 52 der Rohrfeder 48 mit dem Federendstück 54 verlötet ist. Dabei handelt es sich bei dem Verlöten um die bei dem beschriebenen Ausführungsbeispiel gewählte Art der Herstellung der starren Verbindung der beiden Enden der Rohrfeder 48 mit dem Federträger 40 bzw. dem Federendstück 54. Diese Verbindung ist jedoch nicht notwendigerweise eine Lötverbindung. Vielmehr kommen auch andere Arten der stoffschlüssigen Verbindung, insbesondere eine Schweißverbinung, in Frage.

Beim dargestellten Ausführungsbeispiel ist das Federendstück 54 als Kappe ausgebildet, die einen Boden 56 und zwei Seitenwände 58 und 60 aufweist. Der Boden 56 und die beiden Seitenwände 58 und 60 bestehen aus Metallblech und sind durch Umbiegen der Seitenwände 58 und 60 sowie des Bodens 56 relativ zueinander zu der Kappe geformt worden. Mit der einen Seitenwand 60 ist einstückig ein L-förmiger Ansatz 62 ausgebildet, dessen von dem Federendstück 54 ausgehender Schenkel 64 parallel zu den Ebenen der beiden Platinen 4 und 6 verläuft. Der andere Schenkel 66 des Ansatzes 62 erstreckt sich im wesentlichen senkrecht zu den Ebenen der beiden Platinen 4 und 6 und bildet einen Anschlag für den U-förmigen Hebelabschnitt 36. Das freie Ende des Hebelabschnitts 36 liegt aufgrund der von der Vorspannfeder 38 ausgeübten Vorspannkraft auf der dem Federendstück 54 zugewandten Seite des Schenkels 66 an.

In den Figuren 1 und 2 ist das Meßsystem im drucklosen Zustand dargestellt. Wenn in der Rohrfeder 48 der Meßdruck wirkt und höher als der von außen auf die Rohrfeder 48 wirkende Umgebungsdruck ist, wird die Rohrfeder 48 aufgeweitet und wird dadurch deren anderes Ende 52 in Richtung eines Pfeiles M in Fig. 2 ausgelenkt. An dieser Auslenkung nimmt das Federendstück 54 teil, was zur Folge hat, daß der Schenkel 66 das Zahnsegment 32 im Gegenuhrzeigersinn in Fig. 2 schwenkt, so daß die Zeigerwelle 24 entsprechend der Auslenkung gedreht wird. In Fig. 2 ist zusätzlich der verzahnte Abschnitt 34 in seiner dem Nenndruck des Meßsystems entsprechenden Endstellung 34' dargestellt.

Fig. 5 zeigt ein Druckmeßgerät, bei dem das Meßsystem gemäß den Figuren 1 bis 4 angewendet ist. Das Druckmeßgerät umfaßt ein Gehäuse 68, zu dem ein Geräteanschluß 70 gehört, der als Gewindezapfen ausgebildet ist und mit einem Außengewinde und einem im Gewindezapfen ausgebildeten Sackloch 72 versehen ist. Der Geräteanschluß 70 dient zum Anschließen des Druckmeßgerätes an ein System, das den Stoff führt, dessen Druck mittels des Druckmeßgerätes gemessen werden soll. Auf der vom Geräteanschluß 70 abgewandten Seite des Gehäuses 68 ist in dieses eine durchsichtige Sichtscheibe 74 eingesetzt. In dem vom Gehäuse 68 und der Sichtscheibe 74 umschlossenen Raum ist das Meßsystem derart angeordnet, daß seine obere Platine 4 der Sichtscheibe 74 zugewandt ist. An der oberen Platine 4 des Meßsystems ist das Zifferblatt 12 befestigt, wozu zwei am Zifferblatt 12 angeformte Zapfen 76 in die Befestigungslöcher 10 in der oberen Platine 4 eingerastet sind. Auf den Zeigerzapfen 26 ist ein Zeiger 78 gesteckt, dessen Stellung über dem Zifferblatt 12 durch die Sichtscheibe 74 hindurch sichtbar ist, so daß der auf dem Zifferblatt 12 vom Zeiger 78 angezeigte Druckwert abgelesen werden kann.

In Fig. 5 sind das Gehäuse 68, das Zifferblatt 12 und die Sichtscheibe 74 im Schnitt dargestellt, wogegen das Meßsystem, das die Ausbildung gemäß den Figuren 1 bis 4 hat, in einer Fig. 1 entsprechenden Seitenansicht gezeigt ist. Dabei ist die Rohrfeder 48 weggebrochen dargestellt. In Fig. 5 sind die das andere Ende 52 der Rohrfeder 48 aufweisende Hälfte der Rohrfeder 48 sowie das Federendstück 54 wegen der abgebrochenen Darstellung der Rohrfeder 48 nicht gezeigt. Mit Strich-Doppelpunkt-Linien ist jedoch der Ansatz 62, der sich vor der Zeichenebene von Fig. 5, befindet eingezeichnet. Wie in Fig. 5 erkennbar ist, ist das Meßsystem 2 in Fig. 5 in einer Position dargestellt, die sich durch Drehung des Meßsystems aus der in Fig. 1 gezeigten Stellung um ungefähr 180° um die Achse der Zeigerwelle 24 ergibt.

An der Innenwand 80 des Gehäuses 68 sind an den Befestigungslöchern 10 in der unteren Platine 6 entsprechenden Stellen Vorsprünge 82 angeformt. Diese sind in Fig. 5 nicht dargestellt. Einer dieser Vorsprünge 82 ist jedoch in Fig. 6 gezeigt. Um das Meßsystem am Gehäuse 68 zu befestigen, wird die untere Platine 6 derart an die Innenwand 80 angesetzt, daß die Vorsprünge 82 durch die Befestigungslöcher 10 treten. Danach werden die Vorsprünge 82 derart aufgeweitet und abgeflacht, daß sie die in Fig. 6 gezeigte Form annehmen. Auf diese Weise ist die untere Platine 6 am Gehäuse 68 angenietet und dadurch das gesamte Meßsystem am Gehäuse befestigt.

Im Gehäuse 68 ist eine Bohrung 84 ausgebildet, die an ihrem einen Ende durch einen Kanal 86 mit dem Sackloch 72 in Verbindung steht und an ihrem anderen Ende in der Innenwand 80 mündet. Die Bohrung 84 ist derart dimensioniert und positioniert, daß sie den Anschlußzapfen 42 abgedichtet aufnimmt, wenn das Meßsystem in vorstehend beschriebener Weise am Gehäuse 68 befestigt ist. Der auf diese Weise hergestellte Druckanschluß zwischen dem Meßsystem und dem Gehäuse ist in Fig. 7 gezeigt. In Fig. 5 ist zwar die Bohrung 84 gezeigt, nicht jedoch der in diese eingesetzte Anschlußzapfen 42.

Im Betrieb gelangt der Meßdruck durch das Sackloch 72, den Kanal 86, die Bohrung 84, die Bohrung 44 im Anschlußzapfen 42 und den Federträger 40 in die Rohrfeder 48. Deren anderes Ende 52 und das Federendstück 54 werden in Abhängigkeit vom Meßdruck ausgelenkt, wobei diese Auslenkung mittels des Zahnsegmentes 32 und des Ritzels 28 zum Zeiger 78 übertragen wird.

Aus der vorstehenden Beschreibung ergibt sich, daß der Anschlußzapfen 42 des Meßsystems nicht zugleich den Geräteanschluß des Druckmeßgerätes bildet, sondern daß vielmehr der Geräteanschluß 72 und der Anschlußzapfen 42 zwei verschiedene Elemente sind. Dies ermöglicht es, das gleiche Meßsystem in Druckmeßgeräte einzubauen, die sich durch ihren Geräteanschluß unterscheiden. Beispielsweise kann das in Fig. 5 dargestellte Druckmeßgerät dadurch abgewandelt sein, daß der rückseitige Geräteanschluß 70 durch einen sogenannten radialen Geräteanschluß ersetzt ist, der durch einen radial, beispielsweise nach unten in Fig. 5, vom Gehäuse 68 vorstehenden Gewindezapfen ersetzt ist. In diesem Fall müßte lediglich der Kanal 86 einen anderen als den dargestellten Verlauf haben. Das Meßsystem einschließlich seines Anschlußzapfens 42 braucht in diesem Fall nicht abgewandelt zu werden, sondern kann die anhand der Figuren 1 bis 4 beschriebene Ausbildung behalten.

Die anhand der Fig. 3 und 4 beschriebene Ausführungsform des Federträgers 40 zeichnet sich durch einfache Fertigung und geringe Abmessungen aus, so daß sie es erleichtert, das Meßsystem kompakt auszubilden.

Obwohl bei dem bevorzugten, vorstehend anhand der Figuren 1 bis 4 erläuterten Ausführungsbeispiel des Meßsystems die Verbindung zwischen dem Zahnsegment und dem Federendstück ohne eine Zugstange realisiert ist, kann in Abwandlung des bevorzugten Ausführungsbeispiels eine solche Zugstange vorgesehen sein. In diesem Fall entfällt der L-förmige Ansatz 62 und ist er durch die Zugstange ersetzt.

## Patentansprüche

1. Meßsystem für ein Druckmeßgerät, mit einem Zeigerwerk (2) das eine obere Platine (4) und eine untere Platine (6), die im wesentlichen parallel zueinander und mit Abstand voneinander angeordnet sind und miteinander verbunden sind, sowie eine ein Ritzel (28) tragende Zeigerwelle (24) und ein Zahnsegment (32) mit einem Hebelabschnitt (36) sowie einem verzahnten Abschnitt (34) aufweist, der mit dem Ritzel (28) kämmt, wobei die Zeigerwelle (24) und das Zahnsegment (32) drehbar in und zwischen den zwei Platinen (4, 6) gelagert sind und wobei die Zeigerwelle (24) einen von der oberen Platine (4) vorstehenden Zeigerzapfen (26) aufweist, und mit einer bogenförmig gekrümmten, metallischen Rohrfeder (48), die an ihrem einen Ende (50) mit einem metallischen Federträger (40) verbunden ist, durch den hindurch der Meßdruck in das Innere der Rohrfeder (48) gelangen kann, und die an ihrem anderen Ende (52) ein mit der Rohrfeder (48) starr verbundenes, metallisches Federendstück (54) trägt, das in Abhängigkeit von dem an die Rohrfeder (48) angelegten Meßdruck auslenkbar ist, wobei das Federendstück (54) mit dem Hebelabschnitt (36) des Zahnsegments (32) derart verbunden ist, daß die Auslenkung des Federstücks (54) zum Hebelschnitt (36) übertragen wird,
wobei der Federträger (40) an einer der beiden Platinen (4, 6) befestigt ist und diejenige Platine (6), an der der Federträger befestigt ist, aus einem Metallblech besteht, und wobei am Federträger (40) ein mit einer in den Innenraum des Federträgers (40) mündenden Bohrung (44) zur Einleitung des Meßdrucks in die Rohrfeder (48) versehener Anschlußzapfen (42) angeformt ist,
**dadurch gekennzeichnet,**
**daß** der Federträger (40) als Hülse (41) ausgebildet ist, die einen in ihrer Längsrichtung verlaufenden Schlitz (46) zur Aufnahme des einen Endes (50) der Rohrfeder (48) aufweist und daß der Anschlußzapfen (42) in Längsrichtung der Hülse (41) und durch ein Loch in der die Hülse tragenden Platine (6) verläuft, wobei der Anschlußzapfen (42) und die Hülse (41) auf entgegengesetzten Seiten dieser Platine (6) angeordnet sind.

2. Meßsystem nach Anspruch 1, **dadurch gekennzeichnet, daß** der Federträger an der unteren Platine (6) befestigt ist.

3. Meßsystem nach Anspruch 2, **dadurch gekennzeichnet, daß** die Hülse (41) durch Verstemmen an der sie tragenden Platine (6) befestigt ist.

## Claims

1. Gauging system for a pressure gauge, with a dial train (2) which has a top plate (4) and bottom plate (6) that are arranged essentially parallel with each other and spaced apart from each other and are connected to each other, a pointer shaft (24) that carries a pinion (28), and a toothed segment (32) with a lever portion (36) and a toothed portion (34) that meshes with the pinion (28), the pointer shaft (24) and the toothed segment (32) being rotatably mounted in and between the two plates (4, 6) and the pointer shaft (24) having a pointer stub (26) projecting from the top plate (4), and with an arcuate metal tube spring (48) with one end (50) connected to a metal spring carrier (40) through which the pressure to be measured can pass into the interior of the tube spring (48), and with its other end (52) carrying a metal spring end piece (54) which is rigidly connected to the tube spring (48) and is deflectable as a function of the measured pressure admitted to the tube spring (48), the spring end piece (54) being connected to the lever portion (36) of the toothed segment (32) so that the deflection of the spring [end] piece (54) is transmitted to the lever [portion] (36), the spring carrier (40) being attached to one of the two plates (4, 6) and the plate (6) to which the spring carrier is attached being made from sheet metal, and a connection shank (42) provided with a bore (44) communicating with the interior of the spring carrier (40) being formed on the spring carrier (40) for admitting the pressure to be measured into the tube spring (48), **characterized in that**
the spring carrier (40) is configured as a sleeve (41) which has a slit (46) extending in its longitudinal direction to receive one end (50) of the tube spring (48) and **in that** the connection shank (42) extends in the longitudinal direction of the sleeve (41) and through a hole in the plate (6) carrying the sleeve, the connection shank (42) and the sleeve (41) being arranged on opposite sides of this plate (6).

2. Gauging system according to Claim 1, **characterized in that** the spring carrier is attached to the bottom plate (6).

3. Gauging system according to Claim 2, **characterized in that** the sleeve (41) is attached by caulking to the plate (6) which carries it.

## Revendications

1. Système de mesure pour un capteur de pression, avec un mécanisme à aiguilles (2) qui comporte une platine supérieure (4) et une platine inférieure (6), lesquelles sont disposées sensiblement parallèlement l'une à l'autre et à distance l'une de l'autre et sont reliées entre elles, ainsi qu'un arbre d'aiguille (24) portant un pignon (28), et un segment de dent (32) avec une partie à levier (36) et une partie dentée (34) laquelle engrène avec le pignon (28), l'arbre d'aiguille (24) et le segment de dent (32) étant montés tournant dans et entre les deux platines (4, 6) et l'arbre d'aiguille (24) comportant un tourillon d'aiguille (26) dépassant de la platine supérieure (4), et avec un ressort tubulaire (48) métallique, courbé en arc, qui est relié par l'une de ses extrémités (50) à un support de ressort (40) métallique à travers lequel la pression de mesure peut parvenir à l'intérieur du ressort tubulaire (48), et qui, à son autre extrémité (52), porte un embout de ressort (54) métallique, qui est relié rigidement au ressort tubulaire (48) et qui peut être dévié en fonction de la pression de mesure qui s'applique au ressort tubulaire (48), l'embout de ressort (54) étant relié à la partie à levier (36) du segment de dent (32) de manière que la déviation de l'embout de ressort (54) soit transmise à la partie de levier (36),
le support de ressort (40) étant fixé à l'une des deux platines (4, 6) et la platine (6), à laquelle est fixé le support de ressort, est constituée d'une tôle mécanique, et sur le support de ressort (40) étant formée une tige de raccordement (42) pourvue d'un trou (44) débouchant dans le volume intérieur du support de ressort (40), pour introduire la pression de mesure dans le ressort tubulaire (48),
**caractérisé en ce que** le support de ressort (40) est réalisé en tant que douille (41) qui présente une fente (46) s'étendant dans sa direction longitudinale, pour recevoir une extrémité (50) du ressort tubulaire (48), et **en ce que** la tige de raccordement (42) s'étend dans la direction longitudinale de la douille (41) et à travers un trou de la platine (6) qui porte la douille, la tige de raccordement (42) et la douille (41) étant disposées sur des côtés opposés de cette platine (6).

2. Système de mesure selon la revendication 1, **caractérisé en ce que** le support de ressort est fixé à la platine inférieure (6).

3. Système de mesure selon la revendication 2, **caractérisé en ce que** la douille (41) est fixée par matage à la platine (6) qui la porte.
